# EUROPÄISCHE PATENTSCHRIFT

(11) **EP 3 876 410 B1**
(45) Veröffentlichungstag und Bekanntmachung des Hinweises auf die Patenterteilung: **19.11.2025**
(21) Anmeldenummer: 20160591.2
(22) Anmeldetag: 03.03.2020
(51) Int. Cl.: H02M 7/483

(54) **STROMRICHTER UND REGELUNGSVERFAHREN DAFÜR**
POWER CONVERTER AND CONTROL METHOD THEREOF
REDRESSEURS ET PROCÉDÉ DE RÉGULATION ASSOCIÉS

(43) Veröffentlichungstag der Anmeldung: 08.09.2021
(73) Patentinhaber: Siemens Energy Global GmbH & Co. KG, 81739 München (DE)
(72) Erfinder: Baruschka, Lennart, 30900 Wedemark (DE); Schuster, Dominik, 91456 Diespeck (DE); Galek, Marek, 82398 Polling (DE); Wahle, Marcus, 90587 Veitsbronn (DE)

(56) Entgegenhaltungen:
- WO-A1-2008/067784
- WO-A1-2017/207045
- US-A1- 2014 002 048
- "Design, Control, and Application of Modular Multilevel Converters for HVDC Transmission Systems, First Edition.", 17 October 2016, JOHN WILEY & SONS, LTD, www.wiley.com/go/Sharifabadi/ModularConverters, article KAMRAN SHARIFABADI ET AL: "Modulation and Submodule Energy Balancing", XP055721860
- YUEBIN ZHOU ET AL: "A control system for large-scale modular multilevel converters", IECON 2013 - 39TH ANNUAL CONFERENCE OF THE IEEE INDUSTRIAL ELECTRONICS SOCIETY, IEEE, 10 November 2013 (2013-11-10), pages 163 - 168, XP032539357, ISSN: 1553-572X, [retrieved on 20131230], DOI: 10.1109/IECON.2013.6699129
- ZHOU YUEBIN ET AL: "A Prototype of Modular Multilevel Converters", IEEE TRANSACTIONS ON POWER ELECTRONICS, INSTITUTE OF ELECTRICAL AND ELECTRONICS ENGINEERS, USA, vol. 29, no. 7, 1 July 2014 (2014-07-01), pages 3267 - 3278, XP011540367, ISSN: 0885-8993, [retrieved on 20140217], DOI: 10.1109/TPEL.2013.2278338

## Beschreibung

Die Erfindung betrifft einen Stromrichter mit einem Stromrichterarm, der eine Reihenschaltung von Nsm Schaltmodulen aufweist, die jeweils steuerbare Halbleiterschalter und einen Energiespeicher umfassen, sowie mit einer Regelungseinrichtung für eine Regelung des Stromrichters.

Ein solcher Stromrichter ist auch unter der Bezeichnung modularer Mehrstufenstromrichter (MMC) bekannt. MMC werden derzeit beispielsweise in Hochspannungsgleichstromübertragungssystemen (HGÜ) oder in Anlagen zur Netzstabilisierung (FACTS) eingesetzt.

Die Energiespeicher der einzelnen Schaltmodule des MMC werden im betrieb des Stromrichters üblicherweise in einen Strompfad im zugehörigen Stromrichterarm zugeschaltet oder überbrückt, um eine durch die Regelung vorgegebene Armspannung zu erzeugen. Die Auswahl der zu schaltenden Schaltmodule wird gemäß einem implementierten Schaltalgorithmus durchgeführt. Die Zuschaltung bzw. Überbrückung des Energiespeichers wird mittels eines Einschaltens bzw. Sperrens der Halbleiterschalter des Schaltmoduls erreicht. Die Ansteuerung der Halbleiterschalter bzw. des Schaltmoduls übernimmt die Regelungseinrichtung im Sinne einer Ansteuereinheit, die mit einem Ansteuerbaustein des jeweiligen Schaltmoduls zusammenwirkt. Eine gleichmäßige Belastung bzw. Beanspruchung der Schaltmodule und insbesondere der Energiespeicher wird dadurch erreicht, dass der Schaltalgorithmus ein gleichmäßiges Schalten der Schaltmodule ermöglicht bzw. bewirkt. In diesem Zusammenhang wird von Balancierung der Energiespeicherspannungen der Energiespeicher bzw. deren Symmetrierung gesprochen.

Üblicherweise ist die Regelungseinrichtung über je eine Datenleitung mit jedem Schaltmodul verbunden, was mit einem enormen Aufwand verbunden ist, sowohl bei der Herstellung des Stromrichters als auch, wegen der großen ausgetauschten Datenmengen, in dessen Betrieb.

Relevanter Stand der Technik für die vorliegende Erfindung ist:
- YUEBIN ZHOU ET AL: "A control system for large-scale modular multilevel converters",IECON 2013 - 39TH ANNUAL CONFERENCE OF THE IEEE INDUSTRIAL ELECTRONICS SOCIETY, IEEE, 10. November 2013 (2013-11-10), Seiten 163-168 und WO 2008/067784 A1.

Die Aufgabe der Erfindung ist es, einen Stromrichter der eingangs genannten Art anzugeben, der möglichst kostengünstig und zuverlässig ist.

Die Aufgabe wird bei einem artgemäßen Stromrichter erfindungsgemäß durch Anspruch 1 gelöst.

Demnach ist eine dezentralisierte Regelung bereitgestellt, bei der eine vorgegebene Anzahl der Schaltmodule je eine Untereinheit der Regelungseinrichtung zugeordnet ist. Diejenigen Schaltmodule eines und desselben Stromrichterarmes, die derselben Untereinheit zugeordnet sind, bilden somit eine Schaltmodulgruppe. Die Regelung bzw. Steuerung der zugeordneten Schaltmodule kann mittels dieser Untereinheit durchgeführt werden. Ein Vorteil der dezentralen Anordnung ist, dass die Zentraleinheit nicht mit jedem Schaltmodul mittels Datenleitungen verbunden sein muss. Vielmehr ist die Zentraleinheit lediglich mit den Untereinheiten mittels Datenleitungen verbunden, was einen Kostenvorteil gegenüber der üblichen Lösung ermöglicht. Die Untereinheiten können zweckmäßigerweise in einer örtlichen Nähe zu den zugeordneten Schaltmodulen angeordnet sein. Die Zentraleinheit kann an einem dazu geeigneten Ort im oder am Stromrichter angeordnet sein, wobei die Entfernung zwischen der Zentraleinheit und den Untereinheiten größer als die Entfernung zwischen den Untereinheiten und den ihnen zugeordneten Schaltmodulen sein kann. In einer solchen Konstellation ist der beschriebene Kostenvorteil besonders hoch. Die dezentrale Anordnung wird im Rahmen der Erfindung dazu genutzt, die Datenmenge der zwischen den Schaltmodulen und der Zentraleinheit ausgetauschten Daten zu reduzieren. Die einzelnen Schaltmodule senden ihre Zustandsdaten an die zugeordnete Untereinheit. Die Untereinheiten hingegen senden bereits bearbeitete Daten an die Zentraleinheit. Je nach Anwendung bzw. je nachdem, welches Regelungsverfahren implementiert ist, ist es im Rahmen der Erfindung ausreichend, wenn die Untereinheiten nur die Summenspannung der zugeordneten Schalteinheiten anstelle aller Schaltmodulspannungen an die Zentraleinheit übermitteln. Eine andere Möglichkeit ergibt sich daraus, dass zwar Status einzelner Schaltmodule an die Zentraleinheit übermittelt wird, allerdings nicht aller, sondern lediglich einiger der zugeordneten Schaltmodule. Die Untereinheiten brauchen insbesondere nicht untereinander verbunden zu sein.

Gemäß einer Ausführungsform der Erfindung ist die Zentraleinheit dazu eingerichtet, jeweils einen zu stellenden Spannungsanteil an die Untereinheiten zu übermitteln. Demgemäß erfolgt die Regelung des Stromrichters, indem eine an dem wenigstens einen Stromrichterarm zu stellende Spannung mittels der Zentraleinheit ermittelt bzw. vorgegeben wird. Die Zentraleinheit ermittelt geeigneterweise aus der zu stellenden Spannung und der Information, die von den Untereinheiten übermittelt werden, welcher Spannungsanteil der gesamten zu stellenden Spannung durch welche Gruppe von Schaltmodulen zu stellen ist. Dieser ermittelte Spannungsanteil wird anschließend an die entsprechenden Untereinheiten übermittelt. Die Spannungsanteile summieren sich dabei zu der gesamten zu stellenden Spannung. Beispielsweise kann in einem Fall, wenn die Summenspannung einer der Gruppen der Schaltmodule unterhalb der durchschnittlichen Summenspannung aller Gruppen des Stromrichterarmes liegt, in Abhängigkeit von einem Strom ib durch den Stromrichterarm der zu stellende Spannungsanteil erhöht werden (falls ib>0) oder erniedrigt werden (falls ib<0) gegenüber dem zu stellenden Spannungsanteil derjenigen Gruppen mit einer überdurchschnittlichen Summenspannung.

Geeigneterweise ist die Zentraleinheit dazu eingerichtet, jeweils eine zu schaltende Anzahl von Schaltmodulen an die Untereinheiten zu übermitteln. Demgemäß ermittelt die Zentraleinheit die Anzahl der Schaltmodule in jeder Gruppe des betreffenden Stromrichterarmes, die geschaltet (eingeschaltet und/oder abgeschaltet) werden sollen, um einer SollwertVorgabe der Regelung zu entsprechen. Aufgrund der übermittelten Information ermitteln die Untereinheiten jeweils selbsttätig, welche Schaltmodule ihrer zugeordneten Gruppe zu schalten sind. Im Rahmen der Erfindung wird ein Schaltmodul eingeschaltet, indem sein Energiespeicher in den Strompfad des Stromrichterarmes geschaltet wird. Es wird ausgeschaltet, indem sein Energiespeicher überbrückt oder auf eine andere Weise aus dem Strompfad genommen wird. Im Rahmen der Erfindung kann die Anzahl auch durch die Angabe einer mittlere Anzahl pro Zeitintervall gegeben sein, also insbesondere durch eine Bruchzahl, wie beispielsweise bei einer Anweisung, 6,72 Module in einem zeitlichen Mittel zu aktivieren.

Es kann von Vorteil sein, wenn die Zentraleinheit dazu eingerichtet ist, jeweils eine Information über die zu schaltenden Schaltmodule an die Untereinheiten zu übermitteln. Beispielsweise kann jede Untereinheit gemäß der Vorgaben der Zentraleinheit eine Vorauswahl treffen, welche Schaltmodule zu einem gegebenen Zeitpunkt zu schalten sind und (nur) die Information über diese einigen ausgewählten Schaltmodule an die Zentraleinheit senden. Die Zentraleinheit ist zweckmäßigerweise dazu eingerichtet, aus den vor-ausgewählten Schaltmodulen aller betreffenden Untereinheiten diejenigen auszuwählen, die zu schalten sind. Die Information über diese zu schaltenden Schaltmodule (eines oder mehrere) können dann mittels der Zentraleinheit an die jeweilige zugeordnete Untereinheit (bzw. Untereinheiten) übermittelt werden.

Bevorzugt ist jede Untereinheit dazu eingerichtet, eine Spannungsbalancierung der dieser Untereinheit zugeordneten Schaltmodule durchzuführen. In der zugeordneten Gruppe von Schaltmodulen kann mittels der jeweiligen Untereinheit eines der dem Fachmann bekannten Balancierungsverfahren verwendet werden. Die Spannungsbalancierung dient dazu, die Energiespeicherspannungen der Schaltmodule möglichst gleich zu halten. Große Abweichungen zwischen Energiespeicherspannungen unterschiedlicher Schaltmodule führen zu einer unterschiedlichen Beanspruchung unterschiedlicher Energiespeicher und langfristig zu einem höheren Ausfallrisiko der betreffenden Schaltmodule. Geeigneterweise kann ein Energiespeicher in Abhängigkeit von der Stromrichtung durch den Stromrichterarm durch Zu- oder Abschalten gezielt auf- bzw. entladen werden. Die Wahl der Zeitpunkte des Schaltens eines Schaltmoduls und/oder der Schalthäufigkeit ermöglicht die Regelung der Energien bzw. Energiespeicherspannungen in den Schaltmodulen. Gemäß dieser Ausführungsform der Erfindung wird die Balancierung auf der Ebene der Gruppen der Schaltmodule dezentral mittels der Untereinheiten durchgeführt.

Vorzugsweise ist jede Untereinheit dazu eingerichtet, eine Sortierung unter den dieser Untereinheit zugeordneten Schaltmodulen auf der Basis von Schaltmodulstatus und/oder von Schaltmodulenergie durchzuführen. Die Sortierung kann zudem in Abhängigkeit von der Stromrichtung des Stromes durch den Stromrichterarm erfolgen. Die Sortierung erfolgt dabei zweckmäßigerweise gemäß dem Ziel, eine Balancierung der Energiespeicherspannungen zu erreichen. Die Sortierung bestimmt, welche Schaltmodule zu einem nächsten Zeitpunkt zu schalten sind, wobei der Status dieser Schaltmodule verändert wird. Es kann von Vorteil sein, wenn mittels der Sortierung eine Vorauswahl der zu schaltenden Schaltmodule getroffen wird. Mit anderen Worten werden einige der Schaltmodule der betreffenden Gruppe als Kandidaten für einen Schaltvorgang ausgewählt. Die Information über die Kandidaten (bspw. deren Status und/oder Energiespeicherspannung) können an die Zentraleinheit übermittelt werden. Auf diese Weise kann ein besonders wirksames Balancierungsverfahren bereitgestellt werden.

Gemäß einer Ausführungsform der Erfindung umfasst der Stromrichter wenigstens zwei Stromrichterarme mit jeweils einer Reihenschaltung der Schaltmodule, wobei wenigstens einer der Untereinheiten Schaltmodule aus zwei unterschiedlichen Stromrichterarmen zugeordnet sind. Bei dieser Variante der Erfindung ist der wenigstens einen Untereinheit eine erste Gruppe von Schaltmodulen zugeordnet, wobei die erste Gruppe sich aus Schaltmodulen zusammensetzt, die in einem ersten Stromrichterarm angeordnet sind. Ferner ist der wenigstens einen Untereinheit eine zweite Gruppe von Schaltmodulen zugeordnet, wobei die Schaltmodule der zweiten Gruppe in einem zweiten Stromrichterarm angeordnet ist. Die wenigstens eine Untereinheit ist insbesondere dazu eingerichtet, eine Spannungs- bzw. Energiebalancierung für jede der Gruppen einzeln und unabhängig durchzuführen. Es ist selbstredend denkbar, dass der Stromrichter weitere Stromrichterarme umfasst und der wenigstens einen Untereinheit eines oder mehrere Schaltmodule auch der weiteren Stromrichterarme zugeordnet sind. Je nach räumlicher Konfiguration des Stromrichters weist diese Variante Vorteile insbesondere bezüglich des Verkabelungsaufwandes.

Zweckmäßigerweise umfasst der Stromrichter sechs Stromrichterarme, die in einer Doppelsternschaltung zwischen einer Wechselspannungsseite und einer Gleichspannungsseite angeordnet sind. Je zwei der Stromrichterarme bilden ein sogenanntes Phasenmodul, indem die Stromrichterarme in Reihe zwischen einem ersten und einem zweiten Gleichspannungspol erstreckt sind. Zwischen den Stromrichterarmen desselben Phasenmoduls ist ein Wechselspannungsanschluss zum Verbinden mit einem Wechselspannungsnetz angeordnet. Somit umfasst die Doppelsternschaltung drei Phasenmodule zwischen dem ersten und dem zweiten Gleichspannungspol, wobei die Gleichspannungspole mit einer Gleichspannungsleitung beispielsweise eines Gleichspannungsnetzes verbindbar sind. Ein solcher Stromrichter ist als Gleichrichter und/oder Wechselrichter einsetzbar. Alternativ kann der Stromrichter beispielsweise drei Stromrichterarme umfassen, die in einer Dreieckschaltung oder einer Sternschaltung miteinander verbunden und als eine Netzstabilisierungseinrichtung (zum Beispiel ein Blindleistungskompensator) in Zusammenwirkung mit einem Wechselspannungsnetz einsetzbar sind.

Vorzugsweise sind an Anschlüssen der Schaltmodule bipolare Spannungen erzeugbar. Mittels einer geeigneten Ansteuerung der Halbleiterschalter des Schaltmoduls können an den Anschlüssen (Anschlussklemmen) des Schaltmoduls zumindest eine positive Schaltmodulspannung, zumindest eine negative Schaltmodulspannung oder eine Nullspannung erzeugt werden. Geeigneterweise entspricht der Betrag der erzeugten Schaltmodulspannung einer an dem Energiespeicher des Schaltmoduls anstehenden Energiespeicherspannung. Ein Beispiel eines solchen Schaltmoduls ist das aus dem Stand der Technik bekannte Vollbrücken-Schaltmodul.

Die Erfindung betrifft ferner ein Regelungsverfahren für einen Stromrichter mit einem Stromrichterarm, der eine Reihenschaltung von Nsm Schaltmodulen aufweist, die jeweils steuerbare Halbleiterschalter und einen Energiespeicher umfassen, sowie mit einer Regelungseinrichtung.

Die Aufgabe der Erfindung besteht darin, ein solches Verfahren anzugeben, dass möglichst kostengünstig und zuverlässig ist.

Die Aufgabe wird erfindungsgemäß durch den Verfahrensanspruch 9 gelöst.

Die Vorteile des erfindungsgemäßen Verfahrens ergeben sich insbesondere aus den bereits im Zusammenhang mit dem erfindungsgemäßen Stromrichter beschriebenen Vorteilen. Das Verfahren kann insbesondere entsprechend im Zusammenhang mit allen zuvor beschriebenen Ausführungsformen (allein oder in Kombination) des erfindungsgemäßen Stromrichters durchgeführt werden.

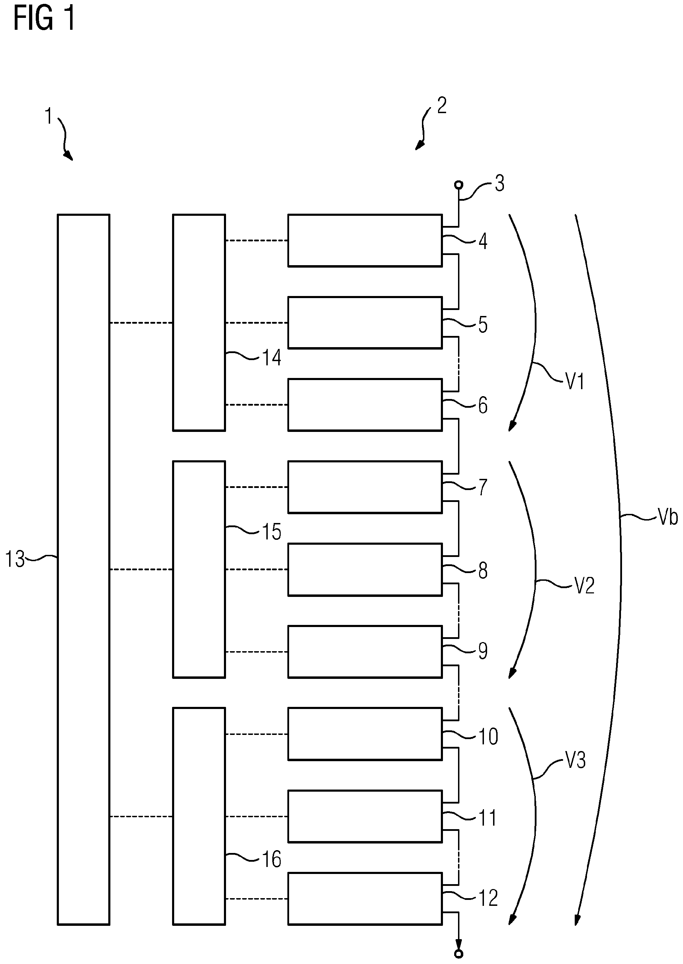

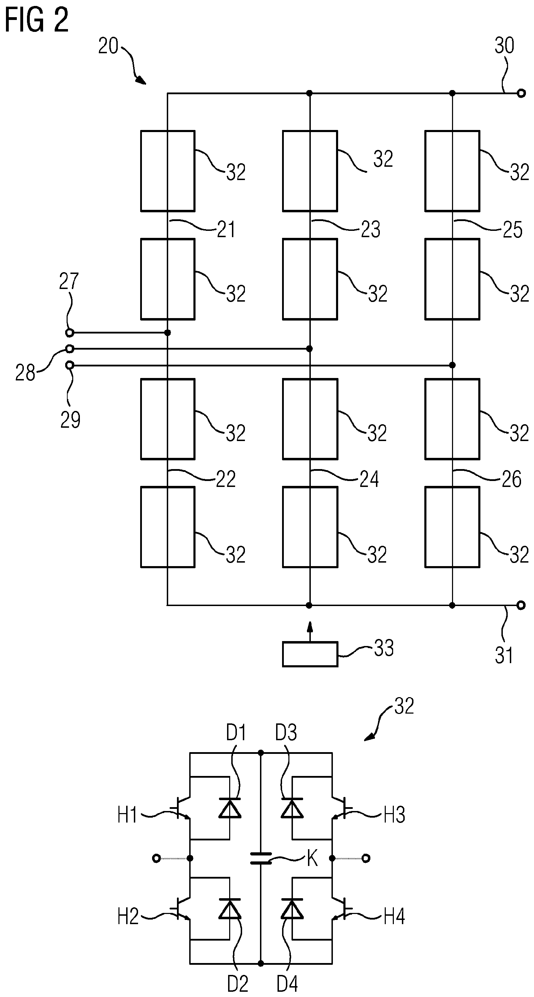

Die Erfindung wird nachfolgend anhand von in den Figuren 1 und 2 dargestellten Ausführungsbeispiele näher erläutert.
Figur 1 zeigt ein Ausführungsbeispiel einer Reglerkonfiguration für den erfindungsgemäßen Stromrichter in einer schematischen Darstellung
Figur 2 zeigt ein erfindungsgemäßes Ausführungsbeispiel eines Stromrichters in einer Doppelstern-Konfiguration.

In der Figur 1 ist eine Regelungseinrichtung 1 für einen Stromrichter 2 dargestellt. Der Stromrichter 2 umfasst einen Stromrichterarm 3, in dem eine Reihenschaltung von neun Schaltmodulen 4 bis 12 angeordnet ist. Die Regelungseinrichtung 1 umfasst eine Zentraleinheit 13 sowie eine erste, zweite und dritte Untereinheit 14, 15 bzw. 16. Die Zentraleinheit ist mittels bidirektionaler Datenleitungen mit den Untereinheiten 14-16 verbunden. Jeder Untereinheit 14-16 sind drei der Schaltmodule 4-12 zugeordnet, wobei jede Untereinheit 14-16 mit den ihr zugeordneten Schaltmodulen 4-6, 7-9 bzw. 10-12 wiederum mittels bidirektionaler Datenleitungen verbunden ist. Die Schaltmodule 4-6 bilden eine erste Gruppe, die Schaltmodule 7-9 eine zweite Gruppe und die Schaltmodule 10-12 eine dritte Gruppe. Der ersten Gruppe sind eine erste Summenspannung V1, der zweiten Gruppe eine zweite Summenspannung V2 und der dritten Gruppe eine dritte Summenspannung V3 zugeordnet. Die Summenspannungen V1-3 summieren sich zu einer Armspannung Vb.

Nachfolgend wird ein Beispiel für das erfindungsgemäße Verfahren in einer Anordnung der Figur 1 beschrieben.

Gemäß dem Beispiel umfasst der Stromrichter einen Stromrichterarm, wobei der Stromrichterarm drei Gruppen von Schaltmodulen mit jeweils drei Schaltmodulen umfasst. Die Schaltmodule sind jeweils Vollbrückenschaltmodule, an deren Anschlüssen jeweils eine positive Schaltmodulspannung Vc, eine negative Schaltmodulspannung -Vc sowie eine Nullspannung erzeugbar sind. Der Zustand des jeweiligen Schaltmoduls bezüglich der Schalmodulspannung wird im Folgenden durch 1, -1 und 0 abgekürzt. Vc bezeichnet den Betrag der entsprechenden Energiespeicherspannung. Es wird zudem zur Erklärungszwecken vorausgesetzt, dass für den Strom ib durch den Stromrichterarm gilt, dass ib>0. Als Beispielwerte werden folgende Spannungen der Schaltmodule SM angenommen:

| Gruppe 1 | | | Gruppe 2 | | | Gruppe 3 | | |
|---|---|---|---|---|---|---|---|---|
| SM | Vc | Status | SM | Vc | SM | SM | Vc | Status |
| 1.1 | 991.3 | 0 | 2.1 | 972.6 | 1 | 3.1 | 977.2 | 0 |
| 1.2 | 997.2 | 1 | 2.2 | 1016.3 | 1 | 3.2 | 1025.9 | 0 |
| 1.3 | 1003.5 | -1 | 2.3 | 984.2 | 0 | 3.3 | 982.2 | 1 |
| 1.4 | 997.5 | 0 | 2.4 | 996.4 | 0 | 3.4 | 1019.0 | 0 |
| 1.5 | 1021.0 | 1 | 2.5 | 999.1 | 1 | 3.5 | 996.2 | 0 |
| 1.6 | 999.8 | 0 | 2.6 | 1026.4 | 0 | 3.6 | 977.3 | 0 |

Jede Untereinheit führt für die ihr zugeordnete Gruppe eine Vor-Sortierung durch. Das Ziel ist es, diejenigen Schaltmodule zu finden, deren Status als nächstes durch Schalten von -1 auf 0 und von 0 auf 1 zu ändern ist, sowie diejenigen Schaltmodule zu finden, deren Status als nächstes von 1 auf 0 und von 0 auf -1 durch geeignetes Schalten zu ändern ist. Die Schaltmodule werden bezogen auf ihren Status und bezogen auf ihre Spannung sortiert. Das Ergebnis ist dementsprechend:

| Gruppe 1 | | | Gruppe 2 | | | Gruppe 3 | | |
|---|---|---|---|---|---|---|---|---|
| SM | Vc | Status | SM | Vc | Status | SM | Vc | Status |
| 1.3 | 1003.5 | -1 | 2.3 | 984.2 | 0 | 3.1 | 977.2 | 0 |
| 1.1 | 991.3 | 0 | 2.4 | 996.4 | 0 | 3.6 | 977.3 | 0 |
| 1.4 | 997.5 | 0 | 2.6 | 1026.4 | 0 | 3.5 | 996.2 | 0 |
| 1.6 | 999.8 | 0 | 2.1 | 972.6 | 1 | 3.4 | 1019.0 | 0 |
| 1.2 | 997.2 | 1 | 2.5 | 999.1 | 1 | 3.2 | 1025.9 | 0 |
| 1.5 | 1021.0 | 1 | 2.2 | 1016.3 | 1 | 3.3 | 982.2 | 1 |

Die Untereinheiten übermitteln die Information über die obersten beiden bzw. die untersten beiden Schaltmodule an die Zentraleinheit. Diese führt dementsprechend eine Sortierung durch, wie in der nachfolgenden Tabelle dargestellt:

| Gemeinsame Liste | | |
|---|---|---|
| SM | Vc | Status |
| 1.3 | 1003.5 | -1 |
| 3.1 | 977.2 | 0 |
| 3.6 | 977.3 | 0 |
| 2.3 | 984.2 | 0 |
| 1.1 | 991.3 | 0 |
| 2.4 | 996.4 | 0 |
| 3.2 | 1025.9 | 0 |
| 3.3 | 982.2 | 1 |
| 1.2 | 997.2 | 1 |
| 2.5 | 999.1 | 1 |
| 2.2 | 1016.3 | 1 |
| 1.5 | 1021.0 | 1 |

Gemäß dem hier dargestellten Beispiel werden die ersten beiden bzw. die letzten beiden Schaltmodule der gesamten Liste als diejenigen ausgewählt, die als nächstes zu schalten sind.

Ein entsprechendes Verfahren kann auch bei anderen Typen von Schaltmodulen durchgeführt werden, wie beispielsweise den aus dem Stand der Technik bekannten Halbbrücken-Schaltmodulen.

Auch bei einer entgegengesetzten Stromrichtung (ib<0) ist das Verfahren entsprechend anwendbar.

In Figur 2 ist ein Stromrichter 20 dargestellt. Der Stromrichter 20 umfasst sechs Stromrichterarme 21-26, die jeweils zwischen einem der Wechselspannungsanschlüsse 27-29 und einem der Gleichspannungspole 30,31 geschaltet sind. In jedem der Stromrichterarme 21-26 ist eine Reihenschaltung von Schaltmodulen 32 angeordnet, wobei die in der Figur 2 gezeigte Anzahl von zwei Schaltmodulen pro Stromrichterarm nur als Beispiel dient und grundsätzlich beliebig und an die jeweilige Anwendung angepasst sein kann.

Die Schaltmodule 32 sind Vollbrücken-Schaltmodule. Jedes Schaltmodul 32 umfasst dementsprechend vier Halbleiterschalter H1-H4 (IGBTs) mit jeweils antiparallel geschalteten Freilaufdioden D1-D4. Ferner umfasst das Schaltmodul 32 einen Energiespeicher in Form eines Kondensators K. Zwei Anschlüsse X1, X2 dienen zum Verbinden des Schaltmoduls 32 mit weiteren Elementen des Stromrichters 20. Eine Regelungseinrichtung 33 kann entsprechend der Regelungseinrichtung 1 der Figur 1 realisiert sein.

## Patentansprüche

1. Stromrichter (2) mit einem Stromrichterarm (3), der eine Reihenschaltung von Nsm Schaltmodulen (4 - 12) aufweist, die jeweils steuerbare Halbleiterschalter und einen Energiespeicher umfassen, sowie mit einer Regelungseinrichtung (1),
wobei die Regelungseinrichtung (1) eine Zentraleinheit (13) und eine Mehrzahl von Nu Untereinheiten (14 - 16) umfasst, die mit der Zentraleinheit (13) verbunden sind, wobei jeder i-ten Untereinheit Ni Schaltmodule zugeordnet sind, wobei jede Untereinheit (14 - 16) dazu eingerichtet ist, an die Zentraleinheit (13)
- eine Summenspannung der zugeordneten Schaltmodule und/oder
- einen Schaltmodulstatus sowie eine Schaltmodulenergie einiger der zugeordneten Schaltmodule zu übermitteln, **dadurch gekennzeichnet, dass**
- die Untereinheiten (14 - 16) dazu eingerichtet sind, anhand von Vorgaben der Zentraleinheit (13) eine Vorauswahl zu treffen, welche Schaltmodule (4 - 12) zu einem gegebenen Zeitpunkt zu schalten sind und Informationen über die vorausgewählten Schaltmodule (4 - 12) an die Zentraleinheit (13) zu senden,
- die Zentraleinheit (13) dazu eingerichtet ist, aus den vorausgewählten Schaltmodulen (4 - 12) aller betreffenden Untereinheiten (14 - 16) diejenigen auszuwählen, die zu schalten sind und eine Information über die zu schaltenden Schaltmodule (4 - 12) an die Untereinheiten (14 - 16) zu übermitteln.

2. Stromrichter (2) nach Anspruch 1,
wobei die Zentraleinheit (13) dazu eingerichtet ist, jeweils einen zu stellenden Spannungsanteil an die Untereinheiten (14 - 16) zu übermitteln.

3. Stromrichter (2) nach einem der vorangehenden Ansprüche,
wobei die Zentraleinheit (13) dazu eingerichtet ist, jeweils eine zu schaltende Anzahl von Schaltmodulen (4 - 12) an die Untereinheiten (14 - 16) zu übermitteln.

4. Stromrichter (2) nach einem der vorangehenden Ansprüche,
wobei jede Untereinheit (14 - 16) dazu eingerichtet ist, eine Spannungsbalancierung der dieser Untereinheit (14 - 16) zugeordneten Schaltmodule durchzuführen.

5. Stromrichter (2) einem der vorangehenden Ansprüche,
wobei jede Untereinheit (14 - 16) dazu eingerichtet ist, eine Sortierung unter den dieser Untereinheit zugeordneten Schaltmodulen auf der Basis von Schaltmodulstatus und/oder von Schaltmodulenergie durchzuführen.

6. Stromrichter (2) nach einem der vorangehenden Ansprüche,
wobei der Stromrichter wenigstens zwei Stromrichterarme mit jeweils einer Reihenschaltung der Schaltmodule umfasst, wobei wenigstens einer der Untereinheiten Schaltmodule aus zwei unterschiedlichen Stromrichterarmen zugeordnet sind.

7. Stromrichter (2) nach einem der vorangehenden Ansprüche,
wobei der Stromrichter (2) sechs Stromrichterarme umfasst, die in einer Doppelsternschaltung zwischen einer Wechselspannungsseite und einer Gleichspannungsseite angeordnet sind.

8. Stromrichter (2) nach einem der vorangehenden Ansprüche,
wobei an Anschlüssen der Schaltmodule (4 - 12) bipolare Spannungen erzeugbar sind.

9. Regelungsverfahren für einen Stromrichter (2) mit einem Stromrichterarm (3), der eine Reihenschaltung von Nsm Schaltmodulen (4 - 12) aufweist, die jeweils steuerbare Halbleiterschalter und einen Energiespeicher umfassen, sowie mit einer Regelungseinrichtung (1), wobei die Regelungseinrichtung (1) eine Zentraleinheit (13) und eine Mehrzahl von Nu Untereinheiten (14 - 16) umfasst, die mit der Zentraleinheit (13) verbunden sind, wobei jeder Untereinheit (14 - 16) Ni Schalteinheiten zugeordnet sind,
bei dem jede Untereinheit (14 - 16)
- eine Summenspannung der zugeordneten Schalteinheiten und/oder
- einen Schaltmodulstatus sowie eine Schaltmodulenergie einiger der zugeordneten Schalteinheiten
an die Zentraleinheit (13) übermittelt und bei dem
- die Untereinheiten (14 - 16) anhand von Vorgaben der Zentraleinheit (13) eine Vorauswahl treffen, welche Schaltmodule (4 - 12) zu einem gegebenen Zeitpunkt zu schalten sind und Informationen über die vorausgewählten Schaltmodule (4 - 12) an die Zentraleinheit (13) senden,
- die Zentraleinheit (13) aus den vorausgewählten Schaltmodulen (4 - 12) aller betreffenden Untereinheiten (14
- 16) diejenigen auswählt, die zu schalten sind und eine Information über die zu schaltenden Schaltmodule (4 - 12) an die Untereinheiten (14 - 16) übermittelt.

## Claims

1. Power converter (2) having a power converter arm (3) comprising a series circuit of Nsm switching modules (4 - 12), each comprising controllable semiconductor switches and an energy storage device, and having a control device (1),
wherein the control device (1) comprises a central unit (13) and a plurality of Nu subunits (14 - 16) which are connected to the central unit (13), wherein Ni switching modules are assigned to each i-th subunit, wherein each subunit (14 - 16) is configured to transmit to the central unit (13)
- a total voltage of the assigned switching modules and/or
- a switching module status and a switching module energy of some of the assigned switching modules, **characterized in that**
- the subunits (14 - 16) are configured to preselect, on the basis of specifications from the central unit (13), which switching modules (4 - 12) are to be switched at a given time and to send information about the preselected switching modules (4 - 12) to the central unit (13),
- the central unit (13) is configured to select, from the preselected switching modules (4 - 12) of all relevant subunits (14 - 16), those which are to be switched and to transmit information about the switching modules (4 - 12) to be switched to the subunits (14 - 16).

2. Power converter (2) according to Claim 1,
wherein the central unit (13) is configured to transmit a voltage component to be set to each of the subunits (14 - 16).

3. Power converter (2) according to one of the preceding claims,
wherein the central unit (13) is configured to transmit a number of switching modules (4 - 12) to be switched to each of the subunits (14 - 16).

4. Power converter (2) according to one of the preceding claims,
wherein each subunit (14 - 16) is configured to perform a voltage balancing of the switching modules assigned to this subunit (14 - 16).

5. Power converter (2) according to one of the preceding claims,
wherein each subunit (14 - 16) is configured to sort the switching modules assigned to this subunit on the basis of switching module status and/or switching module energy.

6. Power converter (2) according to one of the preceding claims,
wherein the power converter comprises at least two power converter arms each with a series circuit of the switching modules, wherein switching modules from two different power converter arms are assigned to at least one of the subunits.

7. Power converter (2) according to one of the preceding claims,
wherein the power converter (2) comprises six power converter arms which are arranged in a double star circuit between an AC side and a DC side.

8. Power converter (2) according to one of the preceding claims,
wherein bipolar voltages can be generated at connections of the switching modules (4 - 12).

9. Control method for a power converter (2) having a power converter arm (3) comprising a series circuit of Nsm switching modules (4 - 12), each comprising controllable semiconductor switches and an energy storage device, and having a control device (1), wherein the control device (1) comprises a central unit (13) and a plurality of Nu subunits (14 - 16) which are connected to the central unit (13), wherein Ni switching units are assigned to each subunit (14 - 16), in which each subunit (14 - 16) transmits
- a total voltage of the assigned switching units and/or
- a switching module status and a switching module energy of some of the assigned switching units to the central unit (13), and in which
- the subunits (14 - 16) preselect, on the basis of specifications from the central unit (13), which switching modules (4 - 12) are to be switched at a given time and to send information about the preselected switching modules (4 - 12) to the central unit (13),
- the central unit (13) selects, from the preselected switching modules (4 - 12) of all relevant subunits (14 - 16), those which are to be switched and transmits information about the switching modules (4 - 12) to be switched to the subunits (14 - 16).

## Revendications

1. Redresseur (2) comprenant un bras (3) de redresseur, qui a un montage série de Nsm modules (4 - 12) de coupure, qui comprennent respectivement des interrupteurs à semiconducteur commandables et un accumulateur d'énergie, ainsi qu'un dispositif (1) de régulation,
dans lequel le dispositif (1) de régulation comprend une unité (13) centrale et une pluralité de Nu sous-unités (14 - 16), qui sont connectées à l'unité (13) centrale, dans lequel Ni modules de coupure sont associés à chaque ième sous-unité, dans lequel chaque sous-unité (14 - 16) est agencée pour transmettre à l'unité (13) centrale
- une tension somme des modules de coupure associés et/ou
- un statut de module de coupure ainsi qu'une énergie de module de coupure de certains des modules de coupure associés,
**caractérisé en ce que**
- les sous-unités (14 - 16) sont agencées pour, à l'aide de prescriptions de l'unité (13) centrale, choisir à l'avance les modules (4 - 12) de coupure à mettre en circuit à un instant donné et les informations à envoyer à l'unité (13) centrale en passant par les modules (4 - 12) de coupure choisis à l'avance,
- l'unité (13) centrale est agencée pour choisir, à partir des modules (4 - 12) de coupure choisis à l'avance de toutes les sous-unités (14 - 16) concernées, ceux à mettre en circuit, et pour transmettre aux unités (14 - 16) une information sur les modules (4 - 12) de coupure à mettre en circuit.

2. Redresseur (2) suivant la revendication 1,
dans lequel l'unité (13) centrale est agencée pour transmettre aux sous-unités (14 - 16) respectivement une proportion de tension à régler.

3. Redresseur (2) suivant l'une des revendications précédentes, dans lequel l'unité (13) centrale est agencée pour transmettre aux sous-unités (14 - 16) respectivement un nombre à mettre en circuit de modules (4 - 12) de coupure.

4. Redresseur (2) suivant l'une des revendications précédentes, dans lequel chaque sous-unités (14 - 16) est agencée pour effectuer un équilibrage de tension des modules de coupure associés à cette sous-unité (14 - 16).

5. Redresseur (2) suivant l'une des revendications précédentes, dans lequel chaque sous-unité (14 - 16) est agencée pour effectuer, sur la base du statut de module de coupure et/ou de l'énergie de module de coupure, un tri parmi les modules de coupure à associer à cette sous-unité.

6. Redresseur (2) suivant l'une des revendications précédentes, dans lequel le redresseur comprend au moins trois bras de redresseur ayant respectivement un montage série des modules de coupure, dans lequel à au moins l'une des sous-unités sont associés des modules de coupure provenant de deux bras différents du redresseur.

7. Redresseur (2) suivant l'une des revendications précédentes, dans lequel le redresseur (2) comprend six bras de redresseur, qui sont montés suivant un circuit en étoile double entre un côté de tension alternative et un côté de tension continue.

8. Redresseur (2) suivant l'une des revendications précédentes, dans lequel des tensions bipolaires peuvent être produites aux bornes des modules (4 - 12) de coupure.

9. Procédé de régulation d'un redresseur (2) comprenant un bras (3) de redresseur, qui a un montage série de Nsm modules (4 - 12) de coupure, qui comprennent respectivement des interrupteurs à semiconducteur commandables et un accumulateur d'énergie, ainsi que comprenant un dispositif (1) de régulation, dans lequel le dispositif (1) de régulation comprend une unité (13) centrale et une pluralité de Nu sous-unités (14 - 16), qui sont connectées à l'unité (13) centrale, dans lequel Ni unités de coupure sont associées à chaque sous-unité (14 - 16),
dans lequel chaque sous-unité (14 - 16) transmet à l'unité (13) centrale
- une tension somme des modules de coupure associés et/ou
- un statut de module de coupure ainsi qu'une énergie de module de coupure de certains des modules de coupure associés,
dans lequel
- les sous-unités (14 - 16) choisissent à l'avance, à l'aide de prescriptions de l'unité (13) centrale, les modules (4 - 12) de coupure à mettre en circuit à un instant donné et les informations à envoyer à l'unité (13) centrale en passant par les modules (4 - 12) de coupure choisis à l'avance,
- l'unité (13) centrale choisit, dans les modules (4 - 12) de coupure choisis à l'avance, de toutes les sous-unités (14 - 16) concernées, ceux à mettre en circuit et transmet aux unités (14 - 16) une information sur les modules (4 - 12) de coupure à mettre en circuit.
